# EUROPEAN PATENT APPLICATION

(11) **EP 1 092 588 A1**
(43) Date of publication of application: **18.04.2001**
(21) Application number: 99870210.4
(22) Date of filing: 14.10.1999
(51) Int. Cl.: B60P 3/34

(54) **Collapsible room and/or storage module for attachment to a mobile living unit**

(71) Applicant: Broers, Jacob, 3910 Sint-Huibrechts-Lille (BE)
(72) Inventor: Broers, Jacob, 3910 Sint-Huibrechts-Lille (BE)
(74) Representative: Van Reet, Joseph

(57) **Abstract**

A collapsible room and/or storage module for attachment to an outer wall (9) of a mobile living unit (2), in particular to a caravan, a motorhome or another camping vehicle, having at least one window opening in said outer wall (9) closeable by means of a removable windowpane (11). The collapsible room and/or storage (1) module being foldable between a collapsed and an extended state and comprises a frame (3) arranged to be attached around said window opening to said outer wall (9), and a pair of side walls (4), a floor (5) and a front wall (7) hinged to said frame (3) andlor to one another. According to the invention, said frame (3) is provided with means for connecting the windowpane (11) to this frame so that it can hinge between a lowered position wherein the module (1), in its collapsed state, is at least partially covered by the windowpane (11) and a raised position wherein, in the extended state of the module (1), the windowpane (11) serves as a roof member (6).

## Description

The present invention relates to a collapsible room and/or storage module for attachment to an outer wall of a mobile living unit, in particular to a caravan or motorhome, having at least one window opening in said outer wall closeable by means of a removable windowpane, the collapsible room module being foldable between a collapsed and an extended state and comprises a frame, means on said frame for attaching it around said window opening to said outer wall of the mobile living unit, and a pair of side walls, a floor and a front wall hinged to said frame and/or to one another.

The collapsible room and/or storage module according to the invention is intended to be attached to a caravan (trailer), a motorhome (camper) or another mobile living unit or camping vehicle in order to create additional space therein. By this increased flexibility, one can initially buy a smaller camping vehicle which is less expensive than a larger one and which is further much more suited in case one has only a relatively small car for pulling the camping vehicle.

Such a collapsible room and/or storage module is already disclosed on US-A-3,778,100. This known module comprises foldable wall, floor and roof members and is fixed by means of bolts to a side wall of the camping vehicle. Before fixing the module to the camping vehicle, the window provided in this side wall is removed and a doorway may optionally be cut in the side wall to permit entry into the module. A drawback of this known module is that it is a large system which, when it is folded in its collapsed state against a side wall of the camping vehicle, completely changes and even spoils the original outlook of the vehicle. A further drawback is that when mounting the module onto the camping vehicle, the camping vehicle is damaged so that the module has to stay thereon. This is especially the case when a doorway is cut in the side of the camping vehicle to permit entry into the module.

An object of the present invention is now to provide a new collapsible room and/or storage module for attachment to an outer wall of a mobile living unit which, in its collapsed state, does nearly not alter the outer appearance of the living unit or at least to a much less extend.

To this end, the collapsible room and/or storage module according to the invention is characterised in that said frame is provided with means for connecting the windowpane to the frame so that it can hinge between a lowered position wherein the module, in its collapsed state, is at least partially covered by the windowpane and a raised position wherein, in the extended state of the module, the windowpane serves as a roof member.

Since the original windowpane covers the module when it is in its collapsed state, the outer appearance of the mobile living unit is nearly not changed. Preferably, the windowpane is provided with a curtain or even more preferably with a reflecting mirror foil so that the folded elements of the module can even not be seen from the outside. An additional advantage of the module according to the invention is that the original windowpane serves as roof member for the module so that the module itself does not have to contain a roof and so that the original windowpane has not to be stored somewhere when mounting the module but can still be effectively be used. In the module according to the invention, the original windowpane can thus, on the one hand, be used for forming the roof of the module in its extended state and, on the other hand, for maintaining the original appearance of the mobile living unit when the module is in its collapsed state.

In a preferred embodiment of the module according to the invention, which is arranged for being attached to a mobile living unit wherein said windowpane is provided with a first part of a hinge co-operating with and removably fixed to a second part of said hinge which is attached to said outer wall, said attaching means on the frame comprise a fourth hinge part, similar to said first hinge part and arranged to co-operate with said second hinge part to attach the module hingedly to the outer wall of the mobile living unit. Alternatively or additionally, said attaching means on the frame may also comprise at least on a top portion of the frame means for hooking the frame through the window opening behind the back of said outer wall.

An advantage of these embodiments is that the module can be attached to the outer wall of the mobile living unit without having to damage this outer wall so that, if the additional room is no longer required, the module can be removed and the original window can be restored by mounting the windowpane again in the window opening. A further advantage is that no drastic modifications have to be applied to the living unit so that the module can be mounted by the user itself on its mobile living unit.

The present invention also relates to a mobile living unit, in particular a caravan, a motorhome or another camping vehicle, comprising an outer wall provided with a window opening which is closeable by means of a removable windowpane and a collapsible room and/or storage module according to the invention, which module is attached around said window opening to said outer wall.

Further advantages and particularities of the invention will become apparent from the following description of some particular embodiments of the room and/or storage module and the mobile living unit according to the invention. This description is only given by way of illustrative example and is not intended to limit the scope of the invention as defined by the annexed claims. The reference numerals used in the description refer to the drawings wherein:
Figures 1 and 2 are partial perspective views of the back of a caravan illustrating a collapsible room and/or storage module according to the invention attached to the caravan and respectively in collapsed and extended state;
Figure 3 is a back elevational view, seen from within the caravan, of the module shown in Figures 1 and 2, in its collapsed state;
Figures 4A and 4B are cross-sectional views according to line IVA-IVB in Figure 3;
Figure 5 is one part of a cross-sectional view according to line V-V in Figure 3;
Figure 6 shows a detail of Figure 5 wherein the side wall of the module has been turned outwards into its extended position;
Figure 7 is a cross-sectional view according to line VII-VII in Figure 6 after the floor has been turned outwards onto the support element which is hingedly connected to a lower edge of the side wall;
Figures 8 and 9 show, in a front elevational view of the left upper corner of the front wall of the module, a detail of the way wherein the front wall is hooked behind a connecting member which is hingedly connected to an upright edge of the left side wall;
Figure 10 is a cross-section according to line X-X in Figure 9;
Figure 11 is, on a smaller scale and in section, a schematic top plan view of the module shown in the previous figures and illustrating the opening of the roof and the side walls;
Figures 12 and 13 are, also on a smaller scale and in section, schematic side elevational views of the module shown in Figure 11 and illustrating the opening of the floor and the front wall of the module.

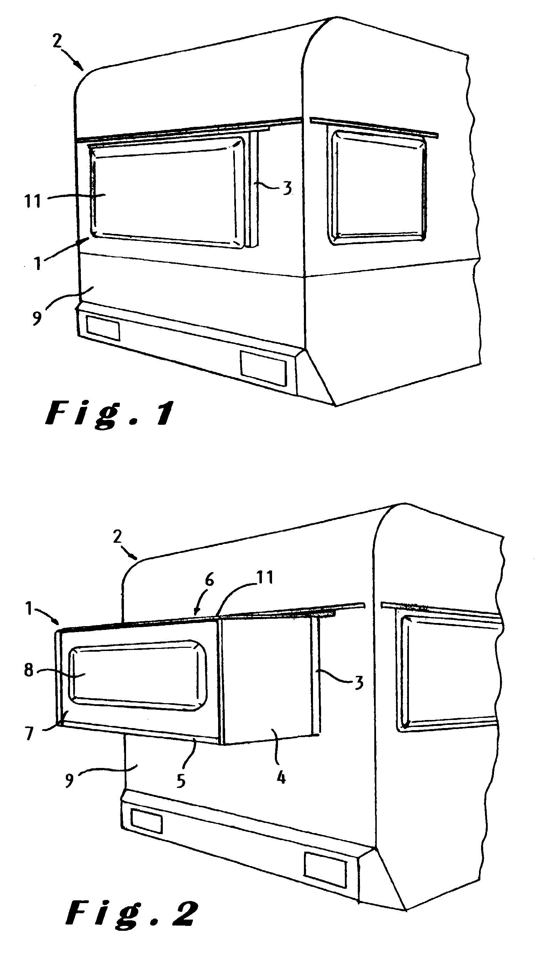

Figures 1 and 2 illustrate an example of a mobile living unit to which the collapsible room and/or storage module 1 according to the invention can be attached, namely a caravan 2. The module can however also be attached to other mobile living units such as a motorhome or camper, a house trailer, etc. The illustrated module 1 comprises in general a frame 3, a pair of side walls 4, a bottom or floor 5, a roof 6 and a front wall 7 which is provided with a window 8. All these elements are hingedly connected to one another so that the room or storage module 1 is foldable between a collapsed state, illustrated in Figure 1, and an extended state, illustrated in Figure 2. Due to the rigidity of the different elements and the hinge connections therebetween, the module 1 is self-supporting.

The module 1 is attached by means of the frame 3 to an outer wall 9, in this case the back wall of the caravan 2, more particularly around a window opening 10 in the outer wall 9. Before attaching the module 1 to the caravan 2, the original windowpane 11 which closes off the window opening 10 is removed. In the module 1 according to the invention, this windowpane 11 is subsequently used as a member of the roof 6, at least in the extended state of the module 1. In the collapsed state, the windowpane 11 covers at least partially the other components of the module 1 so that, as can clearly be seen in Figure 1, the outer appearance of the caravan 2 remains basically unchanged.

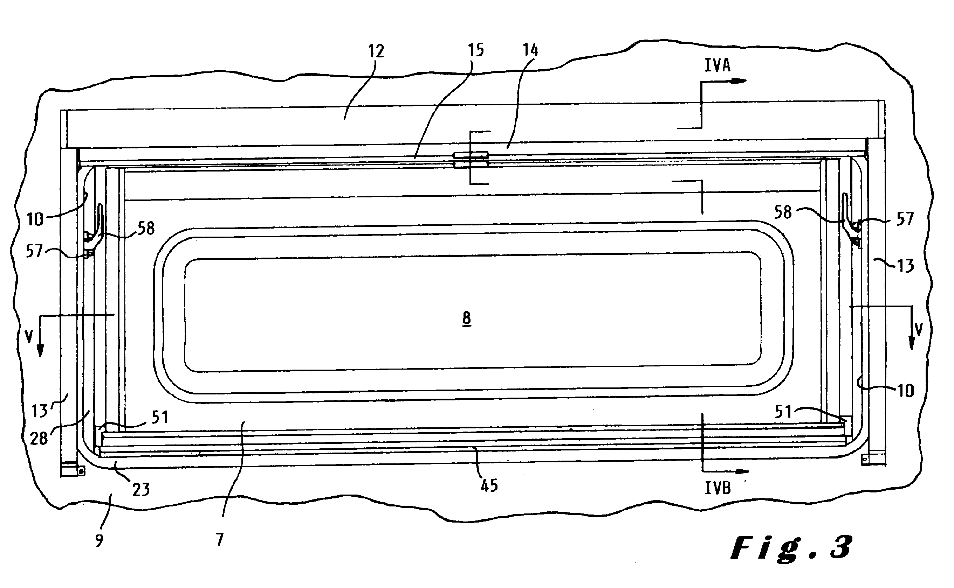

The construction of the illustrated module will now be described more into detail with reference to Figures 3 to 10. Figure 3 is an elevational view on the back of the collapsed module 1 seen from the inside of the caravan 2. In this figure, the front wall 7 with the window 8 can be seen as well as the window shutter box 12 and the guide rails 13 for the shutter 14 and the mosquito curtain 15. By closing the shutter, the module will be hidden from view.

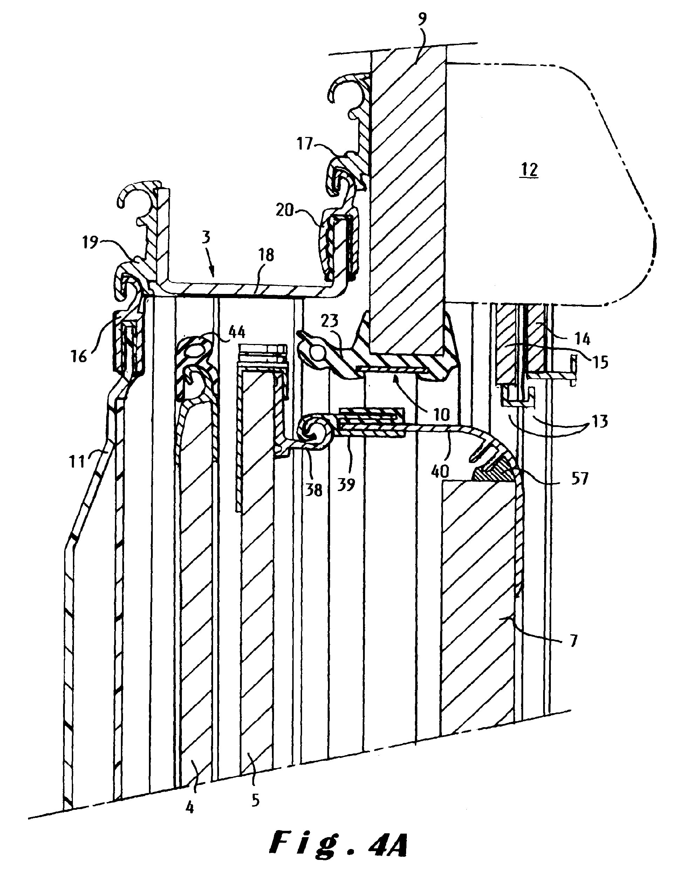

In the cross-sectional view from the top of the module in Figure 4A, it can be seen that the windowpane 11 is provided at the top with a hook-shaped profile 16, which forms a first part of a hinge. In the original position, this first part 16 of the hinge co-operated with a second part 17, more particularly with a profiled metal strip 17 which is fixed to the outer wall 9 of the caravan, to open and close the window. In the module shown in the figures, the frame 3, which is formed at the top by a U-shaped beam 18, is provided at the front with a profiled metal strip 19 which is similar to the profiled strip 17 on the caravan and which serves as a third hinge part to which the windowpane 11 can be hingedly connected.

At the back side of the U-shaped beam 18 of the frame 3, a hook-shaped profile 20, similar to the hook-shaped profile 16 on the windowpane, is clamped over one leg of the U-shaped beam 18 and serves as a fourth hinge part by means of which the frame 3 of the module 1 can be hingedly connected to the profiled strip 17 on the outer wall 9 of the caravan 2. In this way, no screws or bolts have to be applied to the outer wall 9 in order to fix the module 1. In the case that the module has to be attached to a mobile living unit which does not have a profiled strip 17 fixed to its outer wall, such a strip 17 can still be screwed thereto without leaving any visible damage when removing the module. Indeed, such a strip may stay on the living unit when removing the module. Moreover, in the case that the windowpane 11 would not show a first hinge part 16, a frame provided with such a first hinge part 16 could be applied, in particular clamped, around the windowpane 11. In this case, the means on the frame for connecting the windowpane thereto, i.e. the third hinge part 19, are arranged to connect the windowpane 11 to the frame 3 through the intermediary of the frame applied around the windowpane 11.

In an alternate embodiment, which has not been shown in the drawings, an angle profile or other hooking means could be provided on the top part of the frame 3 to hook the frame 3, through the window opening 10, behind the back of the outer wall 9 so that, in this case also, the frame 3 can be fixed without damaging the caravan.

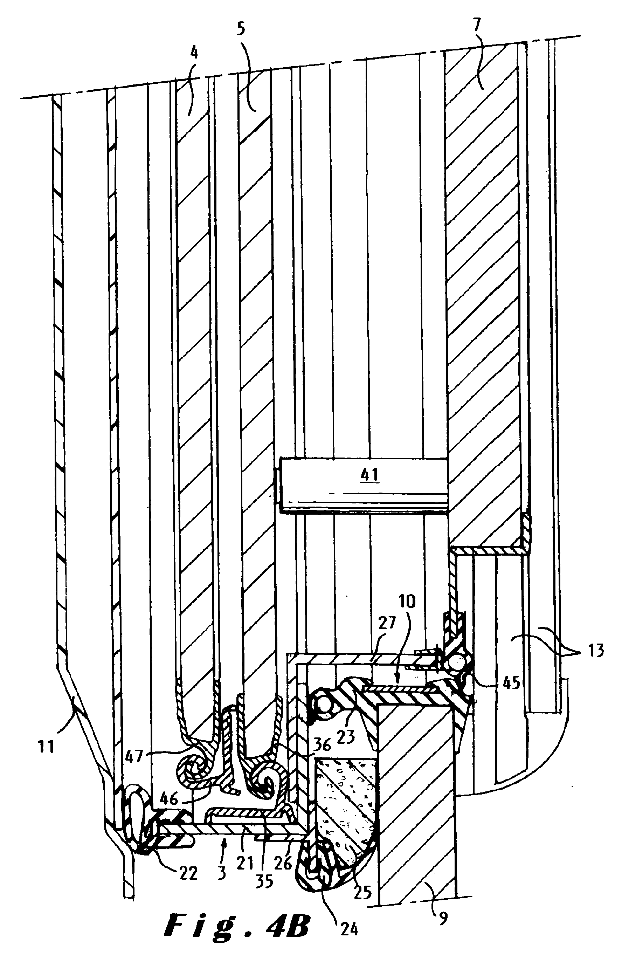

Turning now to Figure 4B, the bottom part of the frame 3 is basically formed by an angle beam 21 provided on the front with a gasket 22 arranged to abut the lower edge of the windowpane 11 to form a moisture tight seal. At the back, the leg of the angle beam 21 engages the window gasket 23 which is originally provided in the window opening to form a hermetic seal with the windowpane 11 when the window is closed. In the illustrated module a further seal is provided on the back of the angle beam 21 in the form of a gasket 24 and a resilient foam strip 25 fixed to a T-shaped profile 26 which is secured to the angle beam 21. The resilient foam strip 25 is further especially intended to give an additional support to the lower side of the module 1.

Also in order to give an additional support, a further angle beam 27 is fixed to the first angle beam 21 of the frame 3 in such a manner that it forms a backward projection extending within the window opening 10 and arranged to be supported by a bottom part of this window opening. In Figure 4B, the backwards projecting leg of the angle beam 27 is not yet supported in the window opening 10 but this can simply be achieved by pushing a strip of the required thickness between this leg and the window opening 10. Further, screws may be screwed through this leg of the angle beam 27 into the window frame, preferably at the location where the original locking elements 57 for the locking handle 58 on the windowpane 11 have been removed. As shown in Figure 3, these locking elements 57 can be fixed on a lateral side of the window opening 10 and the handles 58 on the upright portion of the frame 3 so that this frame 3 can also be secured to the outer wall 9 by means of the handles 58. The locking elements 57 can more particularly be fixed to the window opening at the location where means for keeping the window open, i.e. a sliding or cylinder-piston mechanism, were originally fixed. In this way, the window opening is not damaged. In order to fix the frame to the outer wall without damaging it, it is further possible to screw hooking elements on the angle beam 27 which hook behind the window opening. These hooking elements may for example be formed by a U-shaped profile which is pushed upside down over the angle beam 27 and the outer wall 9 and which may be fixed by means of screws to the angle beam 27.

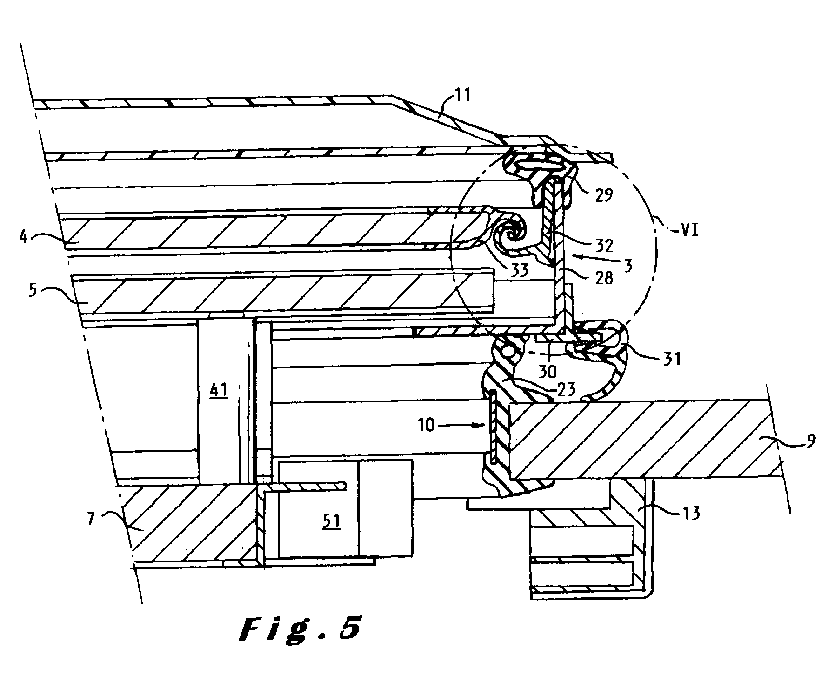

Turning now to Figure 5, the lateral, upright parts of the frame 3 are also formed by an angle beam 28 which shows at the front a gasket 29 arranged to sealingly engage the side edge of windowpane 11 and which engages at the back the window gasket 23. The back of the angle beam 28 is further also provided with a T-shaped profile 30 carrying a gasket 31 which provides a further seal against the wall 9 of the caravan.

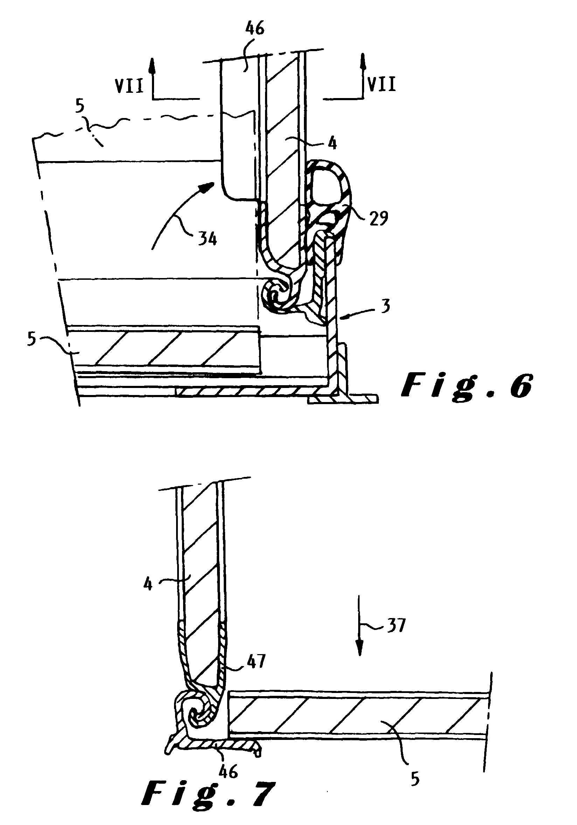

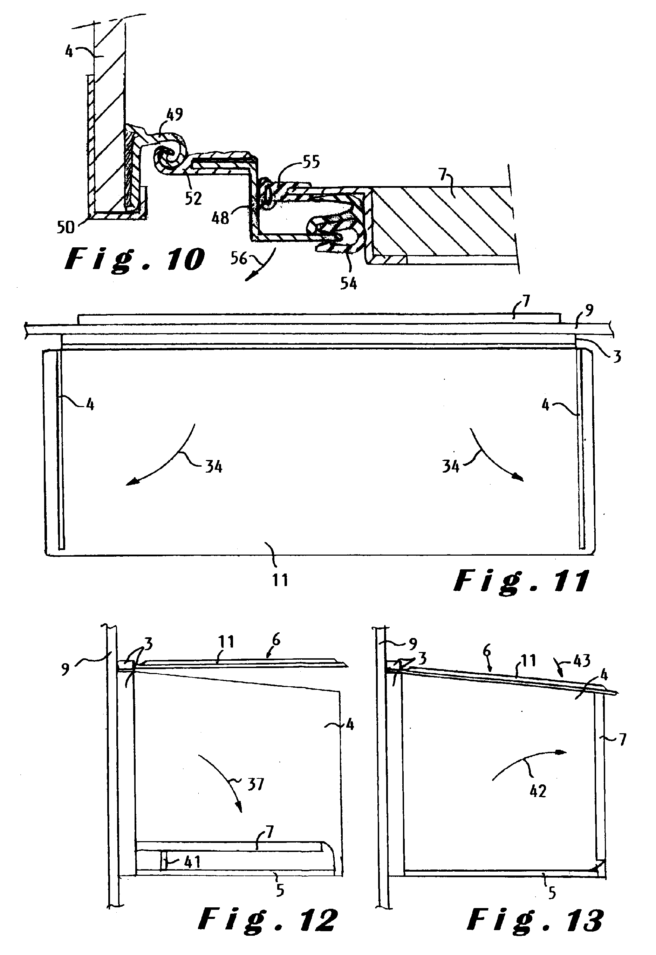

To the forward projecting leg of the angle beam 28 is secured, on the inside, a first part 32 of a hinge, the second part 33 of which is clamped around the upstanding edge of one of the side walls 4. In this way, when the windowpane 11 has been turned upwards around the hinge part 19, the side walls 4 can be turned outwards, to their extended or unfolded state, as shown schematically by arrows 34 in Figures 6 and 11.

As can be seen in Figure 4B, a first part 35 of a same hinge as on the lateral part of the frame 3 is also secured to the angle beam 21 of the bottom part of the frame 3 and a second part 36 of this hinge to a longitudinal edge of the floor panel 5. By rotation around the hinge 35, 36, the floor 5 can be moved from its vertical collapsed position to its horizontal extended position. This rotation is indicated in Figure 12 by arrow 37.

In the embodiment shown in the Figures, the front wall 7 is hingedly connected to the free edge of the floor panel 5 so that, when the floor panel 5 is rotated from its vertical to its horizontal position or vice versa, the front wall 7 performs the same movement as the floor panel 5. The hinge connecting the front wall 7 to the floor panel 5 can be seen in Figure 4A and consists of a first hinge part 38, clamped over the free edge of the floor panel 5 and a second hinge part 39 clamped over a curved connecting piece 40. By the presence of this connecting piece 40, as well as by the presence of distance holders 41 on the other side of the front wall 7, this front wall 7 is maintained at a distance from the floor panel 5 when being folded there against so that it is possible to provide for example curtains or shutters on the inside of the front wall 7. Of course when providing a rigid shutter box similar to the shutter box 12, the distance holders 41 can be omitted. Between the connecting piece 40 and the front wall panel 7 mounting glue 57 is applied in order to reinforce the connecting piece 40 and the fixation thereof to the front wall panel 7. For erecting the front wall 7, it can simply be rotated to its vertical position according to arrow 42 in Figure 13. Subsequently, the windowpane 11 or roof panel is lowered on top of the side and front walls as indicated by arrow 43 in Figure 13.

In order to achieve a moisture tight seal between the top of the side and front walls 4 and 7 and the windowpane 11, the upper edge of the side walls 4 are provided with a gasket 44 whilst the upper edge (in the collapsed state in Figure 4B the lower edge) of the front wall 7 is provided with a gasket 45.

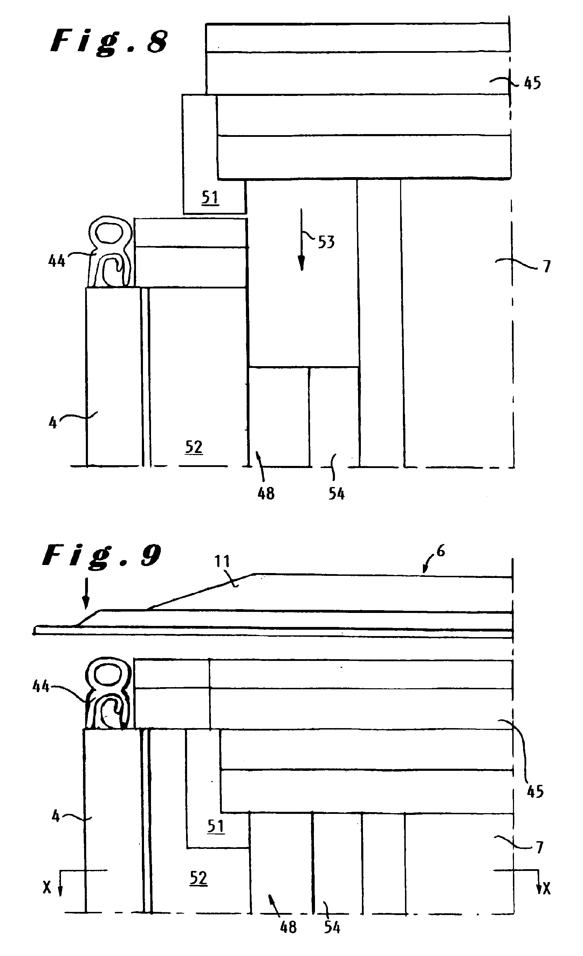

Figure 6 shows a further detail of one of the side walls 4 and the frame 3 when the side wall is turned open according to arrow 34. In this position, the side wall 4 engages the gasket 29 on the front side of the frame 3. In Figure 6, and more clearly in Figure 7, it can further be seen that the side walls 4 show underneath a support element 46 which is hingedly connected to the lower edge of the side wall, more particularly to a hinge part 47 clamped on the lower edge of the side wall 4. This support element 46 can rotate upwards so that, in the collapsed state of the module, it extends parallel to the side wall and lays in this position more particularly flat against the side wall. In the position illustrated in Figures 6 and 7, the support element 46 extends substantially at right angles to the side wall. It has such a width that it supports, in this position, the floor 5 of the module (see Figure 7).

Figures 8, 9 and 10 show how the front wall 7 can be secured to the side walls 4 without necessarily having to make use of nuts and bolts. In this embodiment, a connecting member 48 is hingedly connected to the front edge of the side wall 4, more particularly to a hinge part 49 fixed by means of a clamping U-profile 50 to the upright front edge of the side wall (see Figure 10). The connecting member 48 can rotate according to arrow 56 from the extended position shown in Figure 10, wherein it extends in a direction substantially perpendicular to the direction of the side wall 4, to a retracted position wherein it extends substantially in the same direction as the side wall. In the extended position of the connecting member 48, the front wall 7 can be hooked behind this connecting member 48. The top comers of the front wall 7 are more particularly provided with a wedge shaped piece 51 which can be hooked behind the hinge part 52 of the connecting member 48 by lifting the front wall 7, and thus also the floor panel 5 which is hingedly connected thereto, and by lowering it subsequently again according to arrow 53 from the position shown in Figure 8 to the position shown in Figure 9. As shown in Figure 10, both the upright edge of the connecting member and the upright edge of the front wall 7 are provided with gaskets 54 and 55 respectively to obtain a moisture tight seal.

To the above described module according to the invention, different modifications can be applied without leaving the scope of the invention as defined in the appended claims.

First of all, it is possible to omit the window 8 in the front wall, especially in case the module is used as an additional storage room.

Further, it should be noted that the module may be larger than the window opening. In the embodiment shown in the figures, the length of the floor panel 5 can simply be adapted to the length of the module since it does not have to be folded within the window opening 10. Should it be necessary to fold the floor 5 into the window opening 10, the support elements 46 underneath the side walls 4 could be provided with a panel which forms an extension of the floor of the module. For increasing the length of the front of the module 1, the connecting members 48 could also be made wider or the length of the front panel 7 could be increased. However, in the latter case, the front wall 7 can no longer be folded in the window opening 10 unless the front wall itself is foldable. As for the roof, it is first of all possible to provide at least one further roof member which may, in the illustrated embodiment, also be hingedly connected to the top portion of the frame and which is laterally provided with a gasket to provide a moisture tight seal with the windowpane 11. On the other hand, a frame having a predetermined width could be made for the windowpane so that the total length covered by the framed windowpane corresponds to the length of the module 1. This frame may consist of a panel provided with an opening corresponding to the size of the windowpane 11. The windowpane can either be hingedly connected to this panel or it may be removably fixed thereto for example by means of wing screws.

In a variant embodiment, the hinges may be modified, in particular the hinge between the floor panel 5 and the front wall 7 so that both elements can hinge in the opposite direction and so that, in the collapsed state of the module, the floor is situated between the front wall and the interior of the caravan. A further modification may consist in that, when collapsing the module, the side walls are first folded against the outer wall of the caravan and subsequently the floor and the front wall. Preference is however given to the illustrated embodiment wherein the front wall is folded in the window opening, or the variant embodiment wherein the floor panel is folded within the window opening, since in these embodiments, the thickness of the collapsed module can be kept to a minimum. This is not only important from an aesthetic point of view but, especially in case the module is applied to a side wall, also for safety reasons when driving on the road. Folding the module 1 partially within the window opening 10 is also important to reduce the rotational forces applied by the weight of the module 1 on the outer wall 9 when driving especially over bumpy roads.

From the above description, it will be clear that the module according to the invention can be mounted in a mobile living unit by the user itself and this within a few minutes. Importantly, the module can be mounted without causing any damage to the mobile living unit. It can thus be removed again if it is no longer needed without leaving any traces. The weight of the module can further be kept to a minimum, especially since no separate roof element is needed. The module is also easy to convert from its collapsed to its extended state.

## Claims

1. A collapsible room and/or storage module for attachment to an outer wall (9) of a mobile living unit (2), in particular to a caravan, a motorhome or another camping vehicle, having at least one window opening (10) in said outer wall (9) closeable by means of a removable windowpane (11), the collapsible room and/or storage (1) module being foldable between a collapsed and an extended state and comprises a frame (3), means (20) on said frame (3) for attaching it around said window opening (10) to said outer wall (9) of the mobile living unit (2), and a pair of side walls (4), a floor (5) and a front wall (7) hinged to said frame (3) and/or to one another, characterised in that said frame (3) is provided with means (19) for connecting the windowpane (11) to the frame so that it can hinge between a lowered position wherein the module (1), in its collapsed state, is at least partially covered by the windowpane (11) and a raised position wherein, in the extended state of the module (1), the windowpane (11) serves as a roof member (6).

2. A module according to claim 1 for attachment to said mobile living unit (2) wherein said windowpane (11) is provided with a first part (16) of a hinge co-operating with and removably fixed to a second part (17) of said hinge which is attached to said outer wall (9), characterised in that said connecting means on the frame (3) comprise a third hinge part (19), similar to said second hinge part (17) and arranged to co-operate with said first hinge part (16) on the windowpane (11) to connect the windowpane hingedly to the module (1).

3. A module according to claim 1 or 2 for attachment to said mobile living unit (2) wherein said windowpane (11) is provided with a first part (16) of a hinge co-operating with and removably fixed to a second part (17) of said hinge which is attached to said outer wall (9), characterised in that said attaching means on the frame (3) comprise a fourth hinge part (20), similar to said first hinge part (16) and arranged to co-operate with said second hinge part (17) to attach the module (1) hingedly to the outer wall (9) of the mobile living unit (2).

4. A module according to any one of the claims 1 to 3, characterised in that said attaching means on the frame (3) comprise at least on a top portion (18) of the frame (3) means for hooking the frame (3) through the window opening (10) behind the back of said outer wall (9).

5. A module according to any one of the claims 1 to 4, characterised in that said attaching means on the frame (3) comprise on a bottom portion of the frame (3) at least one backward projection (27) arranged to be supported by a bottom part of said window opening (10).

6. A module according to any one of the claims 1 to 5 for attachment to said mobile living unit (2) wherein said window opening (10) is provided with a circumferential gasket (23) arranged to sealingly engage the peripheral edge of the windowpane (11) in the closed position of the window, characterised in that the frame (3) of the module (1) has a back, at least a portion of which corresponds to the shape of said circumferential gasket (23) and is arranged to sealingly engage this gasket (23) when the module (1) is attached to the outer wall (9) of the mobile living unit (2).

7. A module according to any one of the claims 1 to 6, characterised in that said side walls (4) are hingedly connected to an upright (28, 32) of said frame (3) and show underneath a support element (46) which is hingedly connected to a lower edge (47) of the respective side wall (4) so that it can hinge between a retracted position, wherein the element (46) extends substantially parallel to the side wall (4) and an extended position, wherein it extends substantially at right angles to the side wall (4), the support element (46) having such a width that, in the extended state of the module (1), it supports, in its extended position, the floor (5) of the module (1).

8. A module according to any one of the claims 1 to 7, characterised in that said side walls (4) are hingedly connected to an upright (28, 32) of said frame (3) and show at their upright edges (49) opposite said frame (3), a connecting member (48) which is hingedly connected to the upright edge (49) of the respective side wall (4) so that it can hinge between a retracted position wherein it extends substantially in the same direction as the side wall and an extended position wherein it extends in a direction substantially perpendicular to the direction of the side wall (4).

9. A module according to claim 8, characterised in that the front wall (7) is hingedly connected to the floor (5) and is hooked, in the extended state of the module, behind said connecting member (48).

10. A mobile living unit, in particular a caravan, a motorhome or another camping vehicle, comprising an outer wall (9) provided with a window opening (10) which is closeable by means of a removable windowpane (11) and a collapsible room and/or storage module (1) according to any one of the claims 1 to 9, which module (1) is attached around said window opening (10) to said outer wall (9), is foldable between a collapsed and an extended state and comprises a frame (3), means (2) on said frame (3) for attaching it around said window opening (10) to said outer wall (9) and a pair of side walls (4), a floor (5) and a front wall (7) hinged to said frame (3) and/or to one another, characterised in that said frame (3) is provided with means (19) for connecting the windowpane (11) to the frame_so that it can hinge between a lowered position wherein the module (1), in its collapsed state, is at least partially covered by the windowpane (11) and a raised position wherein, in the extended state of the module (1), the windowpane (11) serves as a roof member (6).
